# EUROPEAN PATENT SPECIFICATION

(11) **EP 3 301 968 B1**
(45) Date of publication and mention of the grant of the patent: **18.12.2019**
(21) Application number: 16818097.4
(22) Date of filing: 21.03.2016
(51) Int. Cl.: H04W 12/06, H04W 28/02, H04W 88/06, H04W 76/10, H04W 8/20

(54) **NETWORK DEVICE AND TERMINAL FOR MULTI-NET AGGREGATION TRANSMISSION, AND OPERATING METHOD THEREOF**
NETZWERKVORRICHTUNG UND ENDGERÄT FÜR MULTINETZWERKAGGREGATIONSÜBERTRAGUNG UND BETRIEBSVERFAHREN DAFÜR
DISPOSITIF DE RÉSEAU ET TERMINAL POUR UNE TRANSMISSION D'AGRÉGATION MULTI-RÉSEAU, ET SON PROCÉDÉ DE FONCTIONNEMENT

(30) Priority: 29.06.2015 KR 20150092490; 16.02.2016 KR 20160018039
(43) Date of publication of application: 04.04.2018
(73) Proprietor: KT Corporation, Seongnam-si, Gyeonggi-do 13606 (KR)
(72) Inventor: JOH, Han Jin, Seongnam-si Gyeonggi-do 13617 (KR); JEUNG, Youn-pil, Seoul 07261 (KR); SEO, Sunghoon, Seoul 06081 (KR); OH, Hong suk, Seoul 06352 (KR)
(74) Representative: Regimbeau
(86) International application number: PCT/KR2016/002812
(87) International publication number: WO 2017/003064

(56) References cited:
- WO-A1-2010/054475
- WO-A1-2012/154506
- WO-A1-2014/044333
- WO-A1-2014/069752
- WO-A1-2015/150875
- WO-A2-2012/074279
- US-A1- 2008 117 832
- US-A1- 2012 201 253

## Description

### [Technical Field]

The present disclosure relates to multinet aggregation.

### [Background Art]

An aggregation transmission is a technology of simultaneously using a plurality of communication networks to transmit data and processes data transmitted to each path in one session. Based on the aggregation transmission technology, a terminal may be connected to a plurality of communication networks at one time and one service / application aggregates a plurality of networks like one network independent of a kind of network or the number of networks to perform communication. Therefore, an aggregation transmission system may use a plurality of available network resources to quickly transmit and receive a large amount of data. Aggregation of a plurality of networks may be called multinet aggregation.

Among the aggregation transmission technologies, there is a multi-path TCP (MPTCP) technology of grouping and using several TCP flows. The MPTCP is an L4 technology for simultaneously using a plurality of IP interfaces. A terminal including a plurality of physical interfaces may be connected to a plurality of communication networks at one time by the MPTCP technology and generates a session in a subflow unit to perform end-to-end communication. As such, research into a technology of simultaneously using a plurality of communication networks to transmit data has progressed but all the servers cannot yet support multi-path communication. Therefore, there is a limitation in that a terminal including a multiple communication interface is hard to perform the multi-path communication with all servers.

Meanwhile, even though the terminal sets the multinet aggregation service, if the terminal is not a multinet aggregation service subscriber, the terminal may not use a multinet aggregation service. Further, the terminal is in a multinet aggregation service possible status and then may be changed to a multinet aggregation service impossible status depending on real-time characteristics of a network, characteristics of applications, a multinet aggregation service setting release, or the like. However, a method for continuously managing a multinet aggregation service status of a terminal and informing a user of an authenticated status has not yet been present. Therefore, there is a limitation in that a user does not properly recognize whether the terminal is providing the multinet aggregation service.

WO2012/154506 provides a mechanism for a multinet aggregation service.

### [DISCLOSURE]

### [Technical Problem]

The present disclosure provides a network apparatus and a terminal and an operating method thereof having advantages of authenticating the terminal capable of using a multinet aggregation service and managing an authenticated status of the terminal.

### [Technical Solution]

The present invention is directed to subject-matter as disclosed by the appended claims.

### [Advantageous Effects]

According to an exemplary embodiment of the present disclosure, the network apparatus may authenticate the use of the multinet aggregation service of the terminal based on various kinds of request messages received from the terminal and periodically manage the authenticated status, thereby controlling the authenticated terminal to continuously use the multinet aggregation service. According to an exemplary embodiment of the present disclosure, the network apparatus may notify the terminal of the authenticated status for the multinet aggregation service and the terminal may display the notification information, such that the user may recognize the authenticated status for the multinet aggregation service to easily find the multinet aggregation service possible status. Further, according to an exemplary embodiment of the present disclosure, the network apparatus may automatically release the setting of the multinet aggregation service even though the multinet aggregation service is set in the non-authentication terminal.

### [Description of the Drawings]

FIG. 1 is a conceptual diagram describing a network aggregation transmission according to an exemplary embodiment of the present disclosure.
FIG. 2 is a diagram describing a configuration diagram of a multinet aggregation system according to an exemplary embodiment of the present disclosure.
FIG. 3 is a diagram describing a multinet aggregation transmission according to an exemplary embodiment of the present disclosure.
FIG. 4 is a diagram exemplarily illustrating a multinet aggregation service setting screen in a terminal according to the exemplary embodiment of the present disclosure.
FIG. 5 is a diagram exemplarily illustrating a traffic flow according to an exemplary embodiment of the present disclosure.
FIG. 6 is a flow chart of a method for setting and authenticating a multinet aggregation service according to an exemplary embodiment of the present disclosure.
FIG. 7 is a flow chart of a method for inquiring a multinet aggregation service status according to an exemplary embodiment of the present disclosure.
FIG. 8 is a flow chart of a method for releasing authentication of a multinet aggregation service according to an exemplary embodiment of the present disclosure.
FIG. 9 is a flow chart of a processing method upon non-response of an authentication server according to an exemplary embodiment of the present disclosure.
FIG. 10 is a flow chart of a method for inquiring multinet aggregation service data usage according to an exemplary embodiment of the present disclosure.
FIG. 11 is a flow chart of a method for providing a multinet aggregation service depending on a payment plan change according to an exemplary embodiment of the present disclosure.
FIG. 12 is a hardware block diagram of a terminal according to an exemplary embodiment of the present disclosure.

### [Mode for Invention]

In the following detailed description, only certain exemplary embodiments of the present disclosure have been shown and described, simply by way of illustration. As those skilled in the art would realize, the described embodiments may be modified in various different ways, all without departing from the scope of the present disclosure. Accordingly, the drawings and description are to be regarded as illustrative in nature and not restrictive. Like reference numerals designate like elements throughout the specification.

Throughout the specification, unless explicitly described to the contrary, the word "comprise" and variations such as "comprises" or "comprising", will be understood to imply the inclusion of stated elements but not the exclusion of any other elements. In addition, the terms "-er" , "-or" and "module" described in the specification mean units for processing at least one function and operation and can be implemented by hardware components or software components and combinations thereof.

In the specification, a terminal may designate a mobile station (MS), a mobile terminal (MT), a subscriber station (SS), a portable subscriber station (PSS), user equipment (UE), an access terminal (AT), or the like, and may include functions of all or a part of the mobile station, the mobile terminal, the subscriber station, the portable subscriber station, the user equipment, the access terminal, or the like.

The terminal of the present specification may access network apparatus such as a base station (BS), an access point (AP), a radio access station (RAS), a node B, an evolved node B (eNodeB), a base transceiver station (BTS), and a mobile multihop relay (MMR)-BS to be connected to a remote server.

The terminal of the present specification is a mobile terminal such as a smart phone, tablet terminals such as a smart pad and a tablet PC, and various types of communication terminals such as computer and television and may include a plurality of communication interfaces.

The communication interface may be diverse. For example, the communication interface may include wireless local area network interface such as WiFi / WLAN / Bluetooth and mobile communication network interfaces such as 3G / long term evolution (LTE) / long term evolution-advanced (LTE-A) and terminal makers may add various communication interfaces. The present specification describes, by way of example, the WiFi interface and the 3G / LTE interface but the communication interface is not limited thereto.

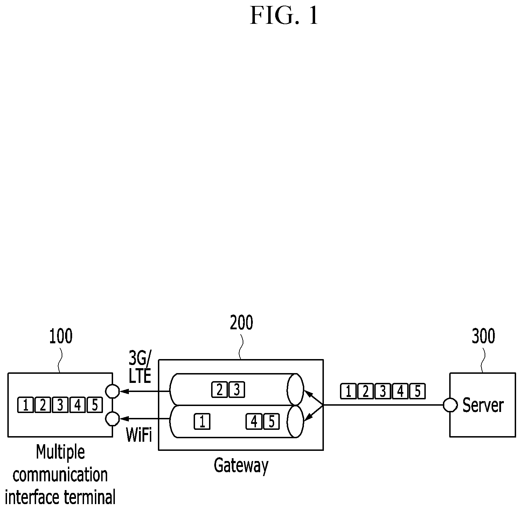

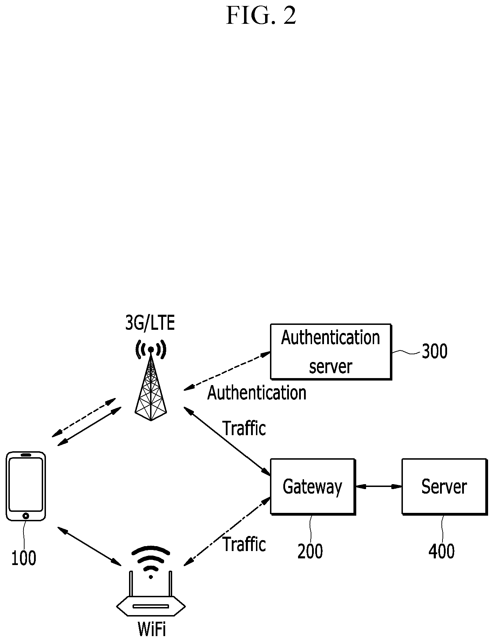

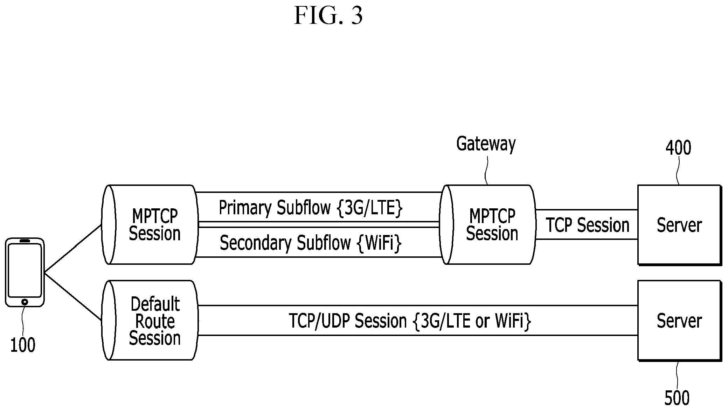

FIG. 1 is a conceptual diagram describing a network aggregation transmission according to an exemplary embodiment of the present disclosure, FIG. 2 is a diagram describing a configuration diagram of a multinet aggregation system according to an exemplary embodiment of the present disclosure, and FIG. 3 is a diagram describing a multinet aggregation transmission according to an exemplary embodiment of the present disclosure.

Referring to FIG. 1, a multinet aggregation transmission is a technology of aggregating a plurality of communication networks to transmit data and may split and transmit data transmitted through one path into paths for a plurality of homogenous networks or a plurality of heterogeneous networks or bind and transmit data transmitted through a plurality of paths into one path.

The multinet aggregation transmission simultaneously transmits data to the plurality of paths and therefore may be called a multi-path transmission.

Referring to FIG. 2, a multinet aggregation system includes a terminal 100, a gateway 200 connected to the terminal 100 through a plurality of networks, and an authentication server 300.

The terminal 100 includes a multiple communication interface and may be connected to a plurality of networks (for example, WiFi network and 3G / LTE network) through the multiple communication interface at one time.

The terminal 100 has a management application embedded therein. The management application may help a user access the terminal 100 to set or manage a multiple network access. The management application may be called a GiGa LTE manager by way of example.

The terminal 100 includes a network agent that performs authentication, status management, and traffic processing for the multinet aggregation, in which the network agent may be implemented as a terminal internal logic. The network agent and various applications in the terminal 100 perform socket communication. The network agent interworks with an authentication server 300 and a gateway 200 according to setting information of the management application for network management. In detail, the network agent includes an authentication server interworking unit implementing an interworking function with the authentication server 300 and a gateway interworking unit implementing an interworking function with the gateway 200. The interworking function with the authentication server 300 may be implemented as a TCP / IP protocol and the interworking function with the gateway 200 may be implemented as a socket secure (SOCKS) protocol. The SOCKS is a protocol used to pass a proxy server when performing TCP / UDP communication between a server and a client. Here, the network agent may be called a multinet aggregation-agent.

The gateway 200 is a network apparatus that aggregates subflows transmitted to a multi-path or splits and transmits a flow transmitted to a single path into the subflows of the multi-path. The gateway 200 is located at a contact of the multinet, for example a contact of the LTE network with the WiFi network. Here, the gateway 200 may be called a multinet aggregation-gateway (MA-GW).

The gateway 200 splits data to transmit the received data to the multiple communication interface of the terminal 100. Further, the gateway 200 may transmit some data to the terminal 100 through the LTE network and the rest data to the terminal 100 through the WiFi network. The terminal 100 aggregates data received through a plurality of communication interfaces. In a similar method, the gateway 200 may aggregate the data transmitted by the terminal 100 through the multiple communication interface and transmit the aggregated data to the server 400.

The authentication server 300 determines whether the terminal 100 is in a multinet aggregation service possible status to authenticate the terminal. The authentication server 300 provides access information (IP address, port value, etc.) of the gateway to the terminal 100 to help the authenticated terminal 100 access the gateway 200. Further, the authentication server 300 periodically checks the authenticated status of the terminal 100 and notifies the terminal 100 of the checked authenticated status. If the terminal 100 is in a multinet aggregation service impossible status, the authentication server 300 transmits the authenticated status and notification information to the terminal. Here, the authentication server 300 may be called a multinet aggregation-policy engine (MA-PE). Communication between the terminal 100 and the authentication server 300 will be described in detail below.

An aggregation technology of the WiFi network with the LTE network may be classified as follows depending on the aggregated point.

An L2 / link hierarchical aggregation generates a dedicated channel to a WiFi AP at a boundary point (i.e., eNB) between an LTE core network and an access network.

An L3 / network hierarchical aggregation generates a virtual IP tunnel to integrate IP addresses independently used at the LTE network and the WiFi network.

An L4 / transmission hierarchical aggregation generates a session through a single access network and then when an additional access network may be used, takes the additional access network part in data transmission independent of an IP address system. In this case, communication parties of an application level use at least one access network to support a structure in a single session based data communication may be performed.

An L7 / application hierarchical aggregation allows a dedicated application / network agent itself to recombine the data received through the LTE network and the WiFi network or split and transmit application protocol data.

As described above, various aggregation transmissions may be made depending to the aggregation transmission layer. Hereinafter, the aggregation technology based on an L4 based multi-path TCP (MPTCP) will be described by way of example.

Referring to FIG. 3, the gateway 200 relays the MPTCP data and the TCP data. When the terminal 100 communicates with the typical TCP server, the gateway 200 may be a proxy server transmitting and receiving (transparent CP supported) data through the MPTCP

Here, it is assumed that the servers 400 and 500 do not support the multiple communication interfaces.

When the terminal 100 may use the multinet aggregation service (for example, when the multinet aggregation service is active), the terminal 100 and the gateway 200 transmit and receive data through a primary subflow and a secondary subflow generated from the primary path (3G / LTE network), a sub-path (WiFi network), respectively.

When the terminal may not use the multinet aggregation service (for example, when the multinet aggregation service is deactivated or the service provided from the server 500 is set not to use the multinet aggregation transmission), the terminal 100 communicates with the server 500 through a default route without passing through the gateway 200. The default path is a basic data transmitting / receiving path that is not connected to the gateway 200. In the case of the WiFi access status, the default path may be the WiFi network and in the case of the WiFi non-access status, the default path may be the 3G / LTE.

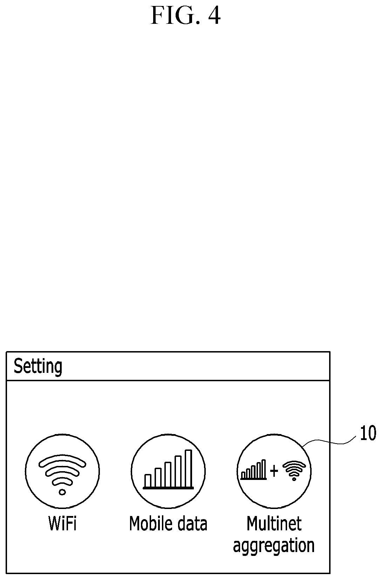

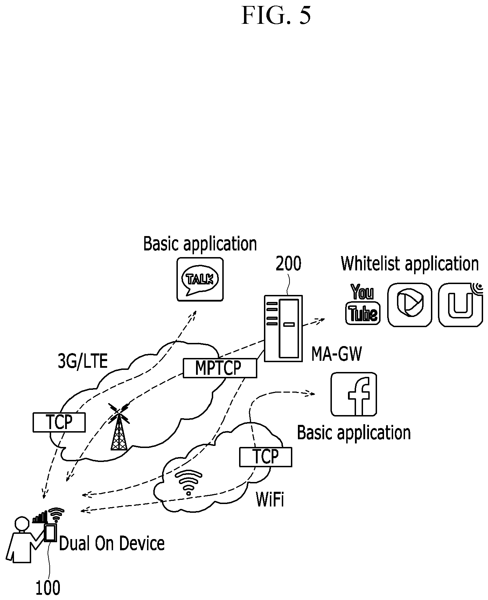

FIG. 4 is a diagram exemplarily illustrating a multinet aggregation service setting screen in a terminal according to the exemplary embodiment of the present disclosure and FIG. 5 is a diagram exemplarily illustrating a traffic flow according to an exemplary embodiment of the present disclosure.

Referring first to FIG. 4, the terminal 100 has the management application embedded therein. The management application may help a user access the terminal 100 to set a communication environment and set communication paths for each application. The management application is executed in the terminal 100 and displays a screen, which may set a communication environment by the access of the user to the terminal 100, on a display. The management application displays a screen that may perform WiFi setting, mobile data setting, multinet aggregation setting (for example, GiGa LTE setting). The management application displays a region 10 that may select the setting of the multinet aggregation (3G / LTE network + WiFi network) on the screen of the terminal 100.

When the region 10 is selected, a multinet aggregation service is set (multinet on) in the terminal 100 and the authentication server interworking unit implementing the interworking function with the authentication server 300 and the gateway interworking unit implementing the interworking function with the gateway 200 are operated to provide the multinet aggregation service. Here, the multinet on means activation of the multinet aggregation service and a multinet off means deactivation of the multinet aggregation service.

When the multinet aggregation service is set, the management application may display a screen that may set applications that may perform data transmission through the multinet aggregation. Applications that may use the multinet aggregation service may be called a whitelist.

The terminal 100 refers to an appropriate routing table depending on the setting/release (on / off) of the multinet aggregation service, sets an MPTCP parameter, and drives the network agent. In this case, the terminal 100 may set the primary subflow of the MPTCP as the 3G / LTE network and set the secondary subflow as the WiFi network. The connection of the primary subflow to the 3G / LTE network may maintain the network connection more stably than the connection of the primary subflow to the WiFi network. The reason is that even when the connection is broken, the 3G / LTE network may supplement resources immediately but the WiFi network secures the network connection only in the corresponding AP resource.

Referring to FIG. 5, the terminal 100 may select transmission networks of each application based on the setting for each application. For example, the terminal 100 may perform the TCP communication with a server of some applications (for example, messenger applications) through the LTE network, TCP communication with a server of some applications (for example, social media applications) through the WiFi network, and perform the MPTCP communication with a server of some applications (for example, moving image service applications) through the gateway (MA-GW) 200. That is, the terminal 100 may transmit and receive data through the LTE network and the WiFi network when using the application belonging to the whitelist and transmit and receive data through the default route when using messenger application.

As such, the terminal 100 manages the MPTCP flow passing through the gateway 200 when the multinet aggregation service is set. Further, the terminal 100 may be switched from the multinet aggregation transmission to the default route when an abnormal situation occurs or depending on session management of the applications.

Meanwhile, even though the terminal 100 sets the multinet aggregation service, if the terminal is not a multinet aggregation service subscriber, the terminal may not use the multinet aggregation service. Further, the terminal 100 is in a multinet aggregation service possible status and then may be changed to a multinet aggregation service impossible status depending on real-time characteristics of a network, characteristics of applications, a multinet aggregation service setting release, or the like. Even though the user sets the multinet aggregation service depending on the varying situation, the terminal 100 may be in the status in which the multinet aggregation service may not be used actually. Hereinafter, the authentication server 300 continuously managing the authenticated status of the terminal 100 and the terminal 100 communicating with the authentication server 300 to recognize the authenticated status of the terminal will be described.

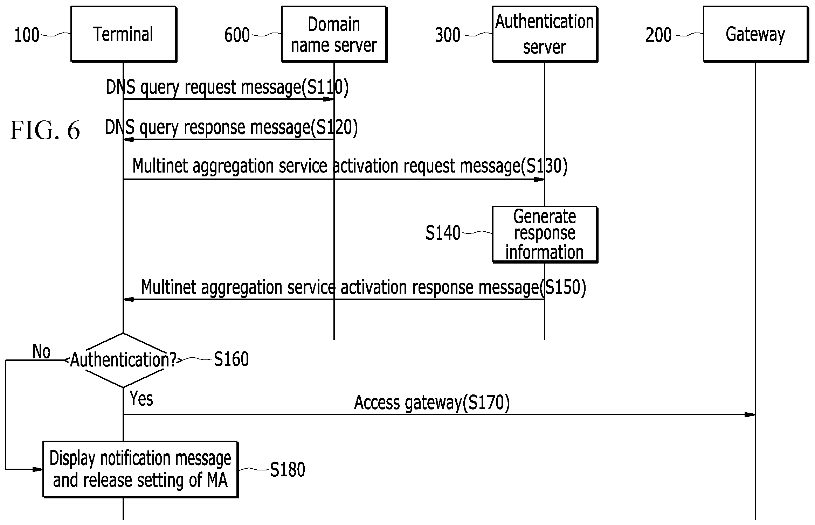

FIG. 6 is a flow chart of a method for setting and authenticating a multinet aggregation service according to an exemplary embodiment of the present disclosure.

Referring to FIG. 6, if the multinet aggregation service is set (on), the terminal 100 transmits a DNS query request message requesting an address of the authentication server 300 to a domain name server 600 (S110).

The domain name server 600 transmits a DNS query response message including the address of the authentication server 300 to the terminal 100 (S120). The DNS query response message may include addresses (for example, IPv4 address or IPv6 address) of a plurality of authentication servers 300.

The terminal 100 transmits a multinet aggregation (MA) service activation request message to the address of the authentication server 300 included in the DNS query response message (S130). When the addresses of the plurality of authentication servers 300 are included in the DNS query response message, the terminal 100 selects one address and uses the selected address as the address of the authentication server 300. Even when the terminal 100 is connected to the WiFi network, the terminal 100 may be set to perform communication through the 3G / LTE network upon the communication with the authentication server 300. The terminal 100 connects the authentication server 300 to a designated TCP connection port. Among the addresses of the plurality of authentication servers 300, the address of the authentication server 300 selected by the terminal 100 is set to be a first address (primary IP) and the non-selected address of the authentication server 300 is set to be a second address (secondary IP).

The authentication server 300 generates response information based on subscriber information of the terminal 100 and a service providing possible status (S140). The response information may include a response result (authenticated result), gateway connection information, etc. The response result is a response to an activation request and therefore corresponds to the authenticated result. For example, the response result may include information accepting an activation request (accepted), information not accepting the activation request (not accepted), service failure information (general failure), etc. When the terminal 100 is the multinet aggregation service subscriber, the authentication server 300 authenticates the terminal 100 and generates the activation request acceptance (accepted) as a response result. When the terminal 100 is not the multinet aggregation service subscriber, the authentication server 300 does not authenticate (non-authenticated) the terminal 100 and generates the information not accepting the activation request (not accepted) as the response result. When a service error occurs, the authentication server 300 does not authenticate the terminal 100 and generates the service failure information (general failure) as the response result. The gateway connection information may include a gateway address, a port, etc. Hereinafter, the case in which the terminal is in the authenticated status or the authentication server accepts the activation request means the status in which the terminal may use the multinet aggregation service. The case in which the terminal is in the non-authenticated status or the authentication server does not accept the activation request means the status in which the terminal may not use the multinet aggregation service.

The authentication server 300 transmits the multinet aggregation (MA) service activation response message including the response information to the terminal 100 (S150).

The terminal 100 confirms the authenticated status based on the multinet aggregation service activation response message (S160).

When being authenticated, the terminal 100 accesses the gateway 200 based on the information included in the multinet aggregation service activation response message (S170).

When not authenticated, the terminal 100 displays a notification message for the authenticated status and releases (off) the setting of the multinet aggregation service (S180). That is, the authentication server 300 controls the non-authenticated terminal not to use the multinet aggregation service.

The authentication server 300 manages the authenticated status of the terminal 100 by the message exchange.

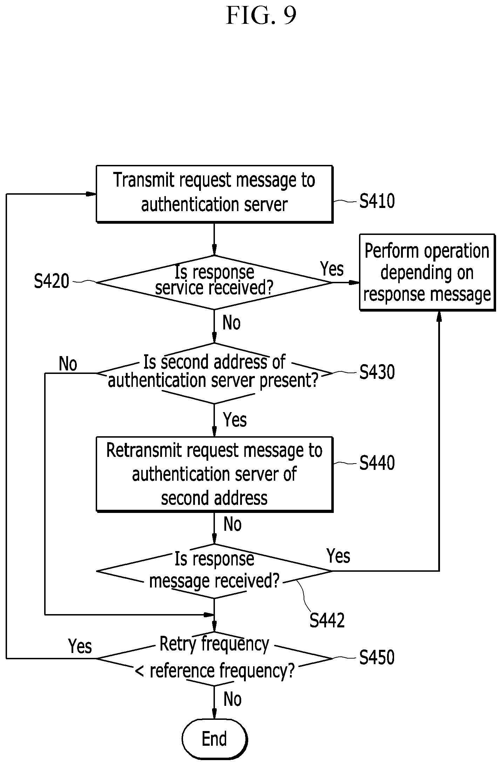

Meanwhile, when the terminal 100 does not receive the multinet aggregation service activation response message, the terminal 100 performs processing operation upon a non-response of the authentication server 300. Upon the non-response of the authentication server 300, the terminal 100 may perform the processing operation described with reference to FIG. 9.

The multinet aggregation (MA) service activation request message includes information of Table 1. The multinet aggregation service activation request message includes a username and a password. The username may include international mobile subscriber identity (IMSI) and mobile station ISDN (MSISDN) which are an identifier, a terminal 3G / LTE IP, a service destination IP, a service package name, and a terminal model name, but may be variously changed. In this case, the MSISDN may use USIM information of the terminal 100 and the service destination IP is the address of the authentication server 300. The username may be expressed as follow by way of example. Username=450081234567890;821012345678;10.1.2.3;20.1.2.3;com.kt.ollehAp p;ABC-M123K

**(Table 1)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x00 |
| | Data Size | 2 | Int | Data size |
| Data | UE Version | 32 | Char | Terminal model name; binary version |
| | | | | (Example) ABC-M123K;G234123U KK |
| | Username (ID) | Variable (Up to 255) | Char | IMSI;MSISDN; terminal 3G/LTE IP;Service Destination IP;service package name; terminal model name |
| | Password | Variable (Up to 255) | Char | Random generation |
| | Reserved | 4 | Char | Reserved 0x00 |

The multinet aggregation (MA) service activation response message includes information of Table 2. The multinet aggregation service activation response message may include response information which includes a status indicating an authenticated result, notification information, status query time, gateway connection information, etc. The status may indicate acceptance (accepted), not acceptance (not accepted), service failure (general failure), etc. The notification information is a UTF-8 type parameter and includes information describing a non-authenticated status and the terminal 100 refers to the information to display a notification message to a user. The gateway connection information may include a gateway address type (MA-GW IP type), a gateway address (MA-GW IP), and a gateway port (MA-GW port).

**(Table 2)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x10 |
| | Data Size | 2 | Int | Data size |
| Data | Status | 1 | Int | 0x00 : Accepted |
| | | | | 0x01 : Not Accepted |
| | | | | 0x02 : General Failure |
| | | | | 0xFF : Reserved |
| | Notification | 255 | Char | User notification message (UTF-8) |
| | Status Query Time | 2 | Int | MA-GW Status query time (Example) when 0xFFFF, 65535 seconds |
| | MA-GW IP Type | 1 | Int | 0x00: IPv4 |
| | | | | 0x01 : IPv6 |
| | | | | 0x02 : FQDN |
| | MA-GW IP | Variable | Char | MA-GW IP address |
| | | | | Last byte null cha addition 0x00 |
| | | | | When IP is several, divided as ";" |
| | MA-GW Port | 2 | Int | MA-GW Port value |
| | Reserved | 4 | Char | Reserved |

The terminal 100 confirms the authenticated status based on a status code included in the multinet aggregation service activation response message and is operated as shown in the following Table 3 depending on the authenticated status. When the notification information is included in the response message, the terminal 100 may display the notification information to allow a user to easily recognize that the setting of the multinet aggregation service is released.

**(Table 3)**

| Status code | Authentication server operation | Terminal operation |
|---|---|---|
| 0x00 | Determination as multinet aggregation service subscriber, Gateway connection information transmission | Prepare next step without performing notification |
| 0x01 | Determination as multinet aggregation service non-subscriber, Notification transmission | Release (off) setting of multinet aggregation service, Display message in notification parameter as notification (toast) |
| 0x02 | Determination as service error, Notification transmission | Release (off) setting of multinet aggregation service, Display message in notification parameter as notification (toast) |

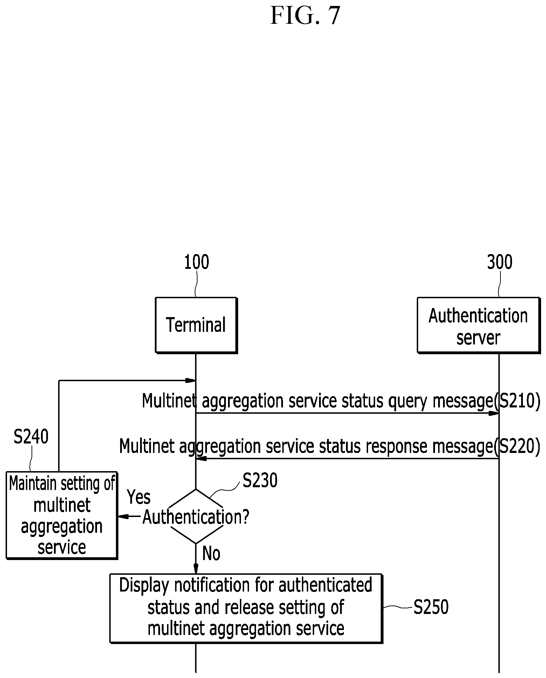

FIG. 7 is a flow chart of a method for inquiring a multinet aggregation service status according to an exemplary embodiment of the present disclosure.

Referring to FIG. 7, the terminal 100 periodically transmits a multinet aggregation (MA) service status query message based on the status query time included in the multinet aggregation service activation response message to the authentication server 300 (S210). If the terminal 100 is providing the multinet aggregation service, the terminal 100 refers to the status query time included in the multinet aggregation service activation response message to periodically query the multinet aggregation service status. After the multinet aggregation service is activated, the terminal 100 confirms the status indicating whether the multinet aggregation service is continuously maintained in the activated status (authenticated status). By this, the user may recognize the continuous status of the multinet aggregation service.

The authentication server 300 transmits the multinet aggregation (MA) service status response message including the status information to the terminal 100 (S220).

The terminal 100 periodically confirms the authenticated status based on the multinet aggregation service status response message (S230).

When being authenticated, the terminal 100 maintains the setting (on) of the multinet aggregation service based on the authenticated status included in the multinet aggregation service activation response message (S240). The terminal 100 waits for the next status query time and if the next status query time arrives, repeats a step S210.

When not authenticated, the terminal 100 displays the notification for the authenticated status and releases (off) the setting of the multinet aggregation service (S250).

The authentication server 300 manages the authenticated status of the terminal 100 by the message exchange.

The multinet aggregation (MA) service status query message includes information of Table 4. The multinet aggregation service status query message includes a username and a password.

**(Table 4)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x02 |
| | Data Size | 2 | Int | Data size |
| Data | Username (ID) | Variable (Up to 255) | Char | IMSI;MSISDN; terminal 3G/LTE IP;Service Destination IP;Service package name; terminal model name |
| | Password | Variable (Up to 255) | Char | Random generation |
| | Reserved | 4 | Char | Reserved |

The multinet aggregation (MA) service status response message includes information of Table 5. The multinet aggregation service status response message may include status information indicating the authenticated result, notification information, etc.

**(Table 5)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x12 |
| | Data Size | 2 | Int | Data size |
| Data | Status | 1 | Int | 0x00 : Accepted |
| | | | | 0x01 : Not Accepted |
| | | | | 0x02 : General Failure |
| | | | | 0xFF : Reserved |
| | Notification | 255 | Char | User notification message (UTF-8) |
| | Reserved | 4 | Char | Reserved |

The terminal 100 confirms the authenticated status based on a status code included in the multinet aggregation service status response message and is operated as shown in the following Table 6 depending on the authenticated status.

**(Table 6)**

| Status code | Authentication server operation | Terminal operation |
|---|---|---|
| 0x00 | Determination as multinet aggregation service subscriber | Query multinet aggregation service status in next status query time without performing notification |
| 0x01 | Determination as multinet aggregation service non-subscriber, Notification transmission | Release (off) setting of multinet aggregation service, Display message in notification parameter as notification (toast) |
| 0x02 | Determination as service error, Notification transmission | Release (off) setting of multinet aggregation service, Display message in notification parameter as notification (toast) |

Meanwhile, when the terminal 100 does not receive the multinet aggregation service status response message, the terminal 100 performs processing operation upon a non-response of the authentication server 300. When not receiving a response by the processing operation upon the non-response, the terminal 100 may transmit the multinet aggregation service status query message in the next status query time to maintain the multinet aggregation service.

If the terminal 100 may provide a normal 3G / LTE service out of a weak electric field or an out of zone (OOZ) in the status in which the multinet aggregation service is set, the terminal 100 may transmit the multinet aggregation service status query message to the authentication server 300 to be re-authenticated.

Alternatively, when the terminal 100 receives a 3G / LTE detach and a 3G / LTE bearer deactivate request, a 3G / LTE attach and 3G / LTE bearer activate procedure is performed. Further, the terminal 100 may transmit the multinet aggregation service activation request message to the authentication server to perform the authentication procedure. In this case, the terminal may register the 3G / LTE IP acquired by the 3G LTE attach and 3G / LTE bearer activate procedure in a username of the multinet aggregation service activation request message to perform the authentication procedure.

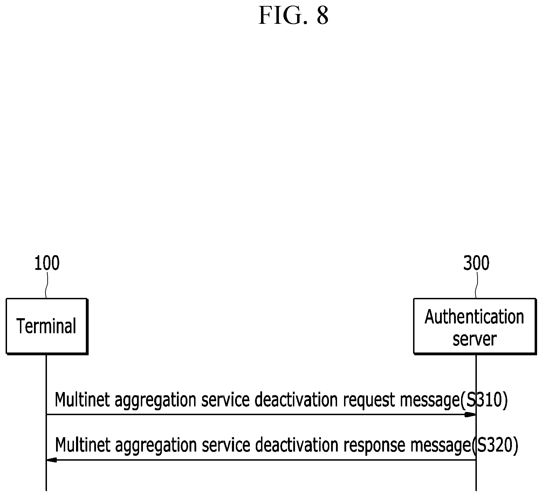

FIG. 8 is a flow chart of a method for releasing authentication of a multinet aggregation service according to an exemplary embodiment of the present disclosure.

Referring to FIG. 8, if the setting of the multinet aggregation service is released (off), the terminal 100 transmits the multinet aggregation (MA) service deactivation request message to the authentication server 300 (S310).

The authentication server 300 transmits the multinet aggregation (MA) service deactivation response message including the response information to the terminal 100 (S320).

The authentication server 300 manages the authenticated status of the terminal 100 by the message exchange.

The multinet aggregation (MA) service deactivation request message includes information of Table 7. The multinet aggregation service deactivation request message includes a username, a password, and reason information. The reason may include a network status and a deactivation reason at the deactivation request timing as shown in the following Table 7. The network status at the deactivation request timing may indicate the network connection status such as LTE and WiFi (LTE+WiFi), 3G and WiFi (3G+WiFi), LTE(LTE Only), and 3G (3G Only). The deactivation reason indicates whether the the multinet aggregation service setting release is requested by the user or whether the authentication is completed by the authentication server 300 and then the release is requested by an error occurring upon the authentication (SOCKS authentication) between the terminal 100 and the gateway 200.

**(Table 7)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x01 |
| | Data Size | 2 | Int | Data size |
| Data | UE Version | 32 | Char | Terminal model name; binary version |
| | Username (ID) | 255 | Char | IMSI;MSISDN; terminal 3G/LTE IP;Service Destination IP;Service package name; terminal model name |
| | Password | 255 | Char | Random generation |
| | Reason | 1 | Int | 0xAB (A, B operation division) |
| | | | | A: Network status at deactivation timing [Value] |
| | | | | 1 : GiGA LTE(LTE+WiFi) |
| | | | | 2 : GiGA LTE (3G+WiFi) |
| | | | | 3 : GiGA LTE(LTE Only) |
| | | | | 4 : GiGA LTE (3G Only) |
| | | | | B : Deactivation reason [Value] |
| | | | | 1: When user releases (off) MA setting |
| | | | | 2: When receiving 0x30 as SOCKS |
| | | | | Authentication Response |
| | | | | 0xFF : Reserved |
| | Reserved | 4 | Char | Reserved |

The multinet aggregation (MA) service deactivation response message includes information of Table 8. The multinet aggregation service deactivation response message may include the response result for the deactivation request and the response result may include information accepting the deactivation request (accepted) . That is, the information accepting the deactivation request (accepted) means the authentication release.

**(Table 8)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x11 |
| | Data Size | 2 | Int | Data size |
| Data | Status | 1 | Int | 0x00 : Accepted |
| | Reserved | 4 | Char | Reserved |

FIG. 9 is a flow chart of a processing method upon non-response of an authentication server according to an exemplary embodiment of the present disclosure.

Referring to FIG. 9, the terminal 100 transmits a request message to the authentication server 300 (S410). The request message may be the multinet aggregation service activation response message, the multinet aggregation service status query message, and the multinet aggregation service deactivation request message. In this case, the terminal 100 transmits the request message to the first address (primary IP) of the authentication server 300.

The terminal 100 waits for the reception of the response message for the request message (S420). When the terminal 100 receives the response message, the terminal 100 is operated depending on the procedure described in FIGS. 6 and 8

When not receiving the response message, the terminal 100 confirms the second address (secondary IP) of the authentication server 300 (S430). The second address (secondary IP) may be received from a domain name server 600 along with the first address (primary IP).

When the second address of the authentication server 300 is present, the terminal 100 retransmits the request message to the authentication server 300 of the second address (S440).

The terminal 100 waits for the reception of the response message for the request message (S442). When the terminal 100 receives the response message, the terminal 100 is operated depending on the procedure described in FIGS. 6 and 8

When not receiving the response message, the terminal 100 determines whether a retry frequency (a number of times being retried) is less than a reference frequency N (S450). The reference frequency may be two times (i.e., N=2).

When the retry frequency is under the reference frequency, the terminal 100 retransmits the request message to the authentication server 300 of the first address (S452).

When the retry frequency is equal to or more than the reference frequency, the terminal 100 ends a procedure (S454).

Meanwhile, when the second address of the authentication server 300 is not present, the terminal 100 moves to a step S450 of determining the retry frequency (S460).

As such, when not receiving the response message from the authentication server 300, the terminal 100 retransmits the request message to the authentication server 300.

If the terminal 100 transmits the multinet aggregation service status query message and then does not receive the response even by the processing operation upon the non-response of FIG. 9, the terminal 100 may transmit the multinet aggregation service status query message in the next status query time to maintain the multinet aggregation service.

Further, if the terminal 100 may provide a normal 3G / LTE service out of a weak electric field or an out of zone (OOZ) in the status in which the multinet aggregation service is activated (on), the terminal 100 may transmit the multinet aggregation service status query message to the authentication server 300 to be re-authenticated.

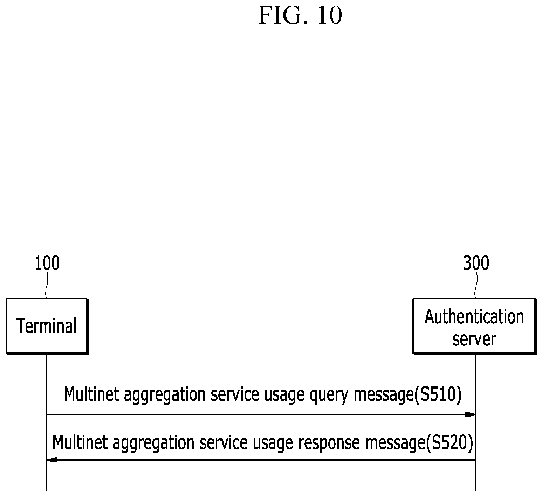

FIG. 10 is a flow chart of a method for inquiring multinet aggregation service data usage according to an exemplary embodiment of the present disclosure.

Referring to FIG. 10, the terminal 100 transmits a multinet aggregation (MA) service usage query message to the authentication server 300 (S510).

The authentication server 300 transmits a multinet aggregation (MA) service usage response message to the terminal 100 (S520).

The multinet aggregation (MA) service usage query message includes information of Table 9.

**(Table 9)**

| Division | Parameters | Size (Bytes) | Type | Contents |
|---|---|---|---|---|
| Header | Name | 8 | Char | "KTMA" |
| | Version | 1 | Int | 0x0X |
| | Type | 1 | Int | 0x03 |
| | Data Size | 2 | Int | Data size |
| Data | Username (ID) | 255 | Char | IMSI;MSISDN; terminal 3G/LTE IP; Service Destination IP; |
| | | | | Service package name; terminal model name |
| | Password | 255 | Char | Random generation |
| | Reserved | 4 | Char | Reserved |

The multinet aggregation (MA) service usage response message includes information of Table 10. The multinet aggregation service usage response message may include data usage for each communication network.

**(Table 10)**

| Division | Parameters | Size (Bytes) | Type | Contents |
|---|---|---|---|---|
| Header | Name | 8 | Char | "KTMA" |
| | Version | 1 | Int | 0x01 |
| | Type | 1 | Int | 0x13 |
| | Data Size | 2 | Int | Data size |
| Data | Status | 1 | Int | 0x00 : Accepted |
| | | | | 0x01 : Not Accepted |
| | | | | 0x02 : General Failure |
| | | | | 0xFF : Reserved |
| | LTE Usage | 8 | Int | LTE accumulated usage (Byte unit) |
| | WiFi Usage | 8 | Int | WiFi accumulated usage (Byte unit) |
| | Notification | 255 | Char | User notification message (UTF-8) |
| | Reserved | 4 | Char | Reserved |

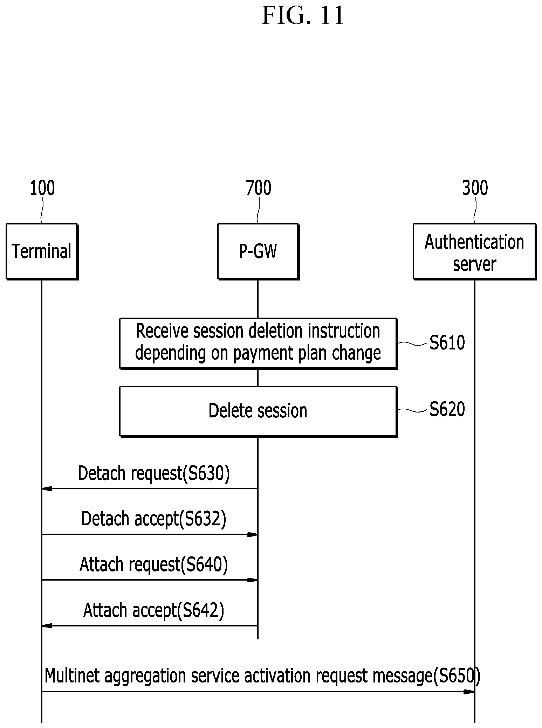

FIG. 11 is a flow chart of a method for providing a multinet aggregation service depending on a payment plan change according to an exemplary embodiment of the present disclosure.

Referring to FIG. 11, the terminal 100 has acquired the authentication of the authentication server 300 and then has been connecting to the gateway 200 to use the multinet aggregation service. In using the multinet aggregation service, a payment plan of user may be changed.

When the payment plan is changed, a packet gateway (P-GW) 700 receives a session deletion / release instruction from a charging and billing apparatus (not illustrated) (S610).

The P-GW 700 deletes a session (S620).

The P-GW 700 transmits a detach request message to the terminal 100 (S630). The P-GW 700 transmits the detach request message to change the IP of the terminal.

The terminal 100 transmits a detach accept message for the P-GW 700 (S632).

The terminal 100 transmits an attach request message to the P-GW 700 (S640).

The P-GW 700 transmits an attach accept message to the terminal 100 (S642). The terminal 100 exchanges the attach request and attach accept message with the P-GW 700 to update the IP.

After the terminal 100 is re-connected to the P-GW 700, as described with reference to FIG. 6, the terminal 100 transmits the multinet aggregation service activation request message to the authentication server 300 to be again authenticated for the multinet aggregation service (S650). The operation after the transmission of the multinet aggregation service activation request message is as described with reference to FIG. 6.

In detail, if the user changes the rate system, a rate system change instruction server (N-STEP) which is a billing server updates user information. The charging server which is a policy server updates a billing policy.

To reflect a billing change matter for the terminal 100 to the connected 3G / LTE system, the policy server requests the session deletion depending on the user rate system change to the P-GW 700. The P-GW 700 deletes a session and exchanges the detach request message and the detach accept message with the terminal 100 based on the 3G / LTE to update the terminal status depending on the rate system change.

If the terminal 100 is detached from the P-GW 700, the IP is not present but to update whether the terminal is subscribed in the 3G / LTE, the terminal 100 exchanges the attach request message and the attach accept message with the P-GW 700 to update the IP. When the IP is updated and thus the multinet aggregation service may not be used, the terminal 100 transmits the multinet aggregation service activation request message to the authentication server 300 to confirm whether the terminal 100 is subscribed.

The authentication server 300 inquires the subscriber based on the multinet aggregation service activation request message and generates the authenticated result based on the inquired result. If it is not confirmed whether the terminal is subscribed based on the rate system change, the processing of allowing the terminal to no longer use the multinet aggregation service is performed.

Meanwhile, the user rate system is changed from a rate system that does not use the multinet aggregation service to a rate system that may use the multinet aggregation service. Even in this case, as described above, the terminal 100 is authenticated by the authentication server 300 depending on the attach procedure after the detach from the P-GW upon the rate system change.

Further, the operation described with reference to FIG. 11 by limiting a speed of the terminal for each rate system or setting exceptions may be performed.

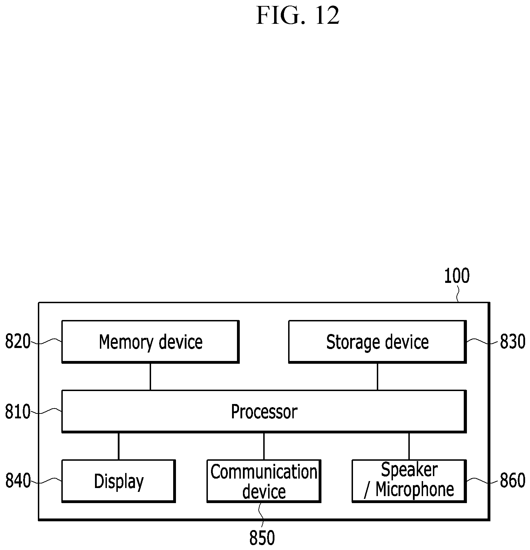

FIG. 12 is a hardware block diagram of a terminal according to an exemplary embodiment of the present disclosure.

Referring to FIG. 12, the terminal 100 is configured of hardware including a processor 810, a memory device 820, a storage device 830, a display 840, a communication device 850, a speaker / microphone 860, etc., and programs executed by being combined with the hardware are stored in a designated location. The hardware has a configuration and performance that may perform the method of the present disclosure. The programs include instructions implementing the operating method of the present disclosure described with reference to FIGS. 1 to 11 and are combined with the hardware such as the processor 810 and the memory device 820 to perform the present disclosure. The program may include instructions for the operation of the network agent that is implemented as the management application and the terminal internal logic. The network agent includes an authentication server interworking unit implementing an interworking function with the authentication server 300 and a gateway interworking unit implementing an interworking function with the gateway 200. Further, the terminal has various application programs embedded therein.

The network apparatus including the gateway 200 and the authentication server 300 is also configured of hardware including the processor, the memory device, the storage device, the communication device etc., and a program executed by being combined with the hardware is stored in a designated location. The hardware has a configuration and performance that may perform the method of the present disclosure. The programs include instructions implementing the operating method of the present disclosure described with reference to FIGS. 1 to 11 and are combined with the hardware such as the processor and the memory device to perform the present disclosure.

As such, according to an exemplary embodiment of the present disclosure, the network apparatus may authenticate the use of the multinet aggregation service of the terminal based on various kinds of request messages received from the terminal and periodically manage the authenticated status, thereby controlling the authenticated terminal to continuously use the multinet aggregation service. According to an exemplary embodiment of the present disclosure, the network apparatus may notify the terminal of the authenticated status for the multinet aggregation service and the terminal may display the notification information, such that the user may recognize the authenticated status for the multinet aggregation service to easily find the multinet aggregation service possible status. Further, according to an exemplary embodiment of the present disclosure, the network apparatus may automatically release the setting of the multinet aggregation service even though the multinet aggregation service is set in the non-authentication terminal.

The foregoing exemplary embodiments of the present disclosure are not implemented only by an apparatus and a method, and therefore, may be realized by programs realizing functions corresponding to the configuration of the exemplary embodiment of the present disclosure or recording media on which the programs are recorded.

While this disclosure has been described in connection with what is presently considered to be practical exemplary embodiments, it is to be understood that the disclosure is not limited to the disclosed embodiments, but, on the contrary, is intended to cover various modifications and equivalent arrangements included within the scope of the appended claims.

## Claims

1. An operating method of a terminal (100) for a multinet aggregation service, comprising:
transmitting a first message requesting multinet aggregation service activation to an authentication server (300);
receiving a second message that is a response to the first message from the authentication server (300); and
accessing a gateway (200) positioned at a contact of the multinet when response information included in the second message is acceptance for the request,
when the response information is the acceptance for the request, the second message includes at least one address of the gateway (200), and
wherein the accessing of the gateway (200) accesses to the gateway (200) based on a first address selected from at least one address
wherein when using multinet aggregation service, the terminal (100) and the gateway (200) transmit and receive data through a primary subflow and a secondary subflow generated through a primary path, a sub path, respectively;
wherein the gateway (200) is a network apparatus that aggregates subflows transmitted to a multi-path or splits and transmits a flow transmitted to a single path into the subflows of the multi-path.

2. The operating method of claim 1, further comprising
transmitting periodically a third message querying the multinet aggregation service status the authentication server (300) depending on the status query time,
wherein when the response information is the acceptance for the request, the second message further includes a status query time,

3. The operating method of claim 2, further comprising:
receiving a fourth message that is a response to the third message from the authentication server (300);
transmitting the third message in a next status query time when response information included in the fourth message indicates an authenticated status; and releasing setting of the multinet aggregation service set in the terminal (100) when the response information included in the fourth message indicates a non-authenticated status.

4. The operating method of claim 3, further comprising
transmitting the third message in the next status query time when the fourth message is not received from the authentication server (300).

5. The operating method of claim 3, further comprising
displaying notification information included in the fourth message when response information included in the fourth message indicates the non-authenticated status.

6. The operating method of claim 1, further comprising
displaying the notification information included in the second message,
wherein when the response information is not the acceptance for the request, the second message further includes notification information describing the response information.

7. The operating method of claim 1, further comprising:
transmitting a fifth message requesting deactivation of the multinet aggregation service to an authentication server; and
receiving a sixth message that is a response to the fifth message from the authentication server.

8. The operating method of claim 7, wherein the fifth message includes a deactivation reason.

9. The operating method of claim 1, further comprising:
prior to the transmitting of the first message,
transmitting a seventh message requesting an address of the authentication server (300) to a domain name server; and
receiving an eighth message that is a response to the seventh message from the domain name server,
wherein the eighth message includes at least one address of the authentication server (300).

10. The operating method of claim 1, further comprising:
retransmitting the first message to the authentication server when the response to the first message is not received from the authentication server,
wherein the retransmitting of the first message to the authentication server (300) includes:
determining whether a second address of the authentication server (300) is present, when the first message is transmitted to a first address of the authentication server and then the response is not received;
transmitting the first message to the second address when the second address of the authentication server (300) is present; and
transmitting the first message to the first address when the second address of the authentication server is not present.

11. The operating method of claim 10, wherein the retransmitting of the first message to the authentication server (300) includes setting a reference frequency for the retransmission and retransmitting the first message to the first address or the second address within the reference frequency.

12. An operating method of an authentication server (300) for a multinet aggregation service of a terminal (100), comprising:
receiving a first message requesting activation of the multinet aggregation service from the terminal (100);
generating response information to the terminal based on the first message; and
transmitting a second message including the response information to the terminal (100),
wherein the response information includes an authenticated result indicating whether the terminal (100) uses the multinet aggregation service when the terminal (100) is a multinet aggregation service subscriber, the response information includes the authenticated result indicating that the terminal uses the multinet aggregation service and at least one address of a gateway (200), and
the gateway (200) is a network apparatus that is positioned at a contact of the multinet and accessed when the terminal (100) uses the multinet aggregation service wherein when using multinet aggregation service, the terminal (100) and the gateway (200) transmit and receive data through a primary subflow and a secondary subflow generated through a primary path, a sub path, respectively;
wherein the gateway (200) is a network apparatus that aggregates subflows transmitted to a multi-path or splits and transmits a flow transmitted to a single path into the subflows of the multi-path.

13. The operating method of claim 12, wherein the generating of the response information generates the authenticated result based on subscriber information and a service providing possible status of the terminal.

14. The operating method of claim 12, wherein
when the terminal is the multinet aggregation service subscriber, the response information further includes a status query time.

15. The operating method of claim 14, further comprising:
receiving periodically a third message querying a multinet aggregation service status from the terminal depending on the status query time; and
transmitting a fourth message that is a response to the third message to the terminal,
wherein the fourth message includes an authenticated result indicating whether the terminal uses the multinet aggregation service.

16. The operating method of claim 13, wherein
when the terminal (100) is not the multinet aggregation service subscriber or a service error occurs, the response information includes an authenticated result indicating that the terminal does not use the multinet aggregation service and notification information describing the authenticated result.

17. The operating method of claim 12, further comprising:
receiving a fifth message requesting deactivation of the multinet aggregation service from the terminal; and
transmitting a sixth message that is a response to the fifth message to the terminal.

18. A terminal for providing a multinet aggregation service, comprising:
at least one communication module;
at least one display;
at least one memory storing a program; and
at least one processor interworking with the communication module, the display, and the memory to execute the program,
wherein the program includes a first program for authenticating the multinet aggregation service, and
the first program includes instructions
transmitting a first message including requesting activation of the multinet aggregation service to an authentication server when setting of the multinet aggregation service is received,
receiving a second message that is a response to the first message from the authentication server, accessing an address of a gateway included in the second message when response information included in the second message is accepted, and
displaying notification information included in the second message when the response information included in the second message is not accepted,
wherein the gateway is a network apparatus that is positioned at a contact of the multinet and relays traffic in the multinet aggregation service
wherein when using multinet aggregation service, the terminal (100) and the gateway (200) transmit and receive data through a primary subflow and a secondary subflow generated through a primary path, a sub path, respectively;
wherein the gateway (200) is a network apparatus that aggregates subflows transmitted to a multi-path or splits and transmits a flow transmitted to a single path into the subflows of the multi-path.

19. The terminal of claim 18, wherein the program includes a second program for inquiring the multinet aggregation service status, and
the second program includes instructions
transmitting a third message querying the multinet aggregation service status to the authentication server depending on a status query time when the status query time is included in the second message,
receiving a fourth message that is a response to the third message from the authentication server,
transmitting the third message in a next status query time when response information included in the fourth message indicates an authenticated status, and
releasing setting of the multinet aggregation service when the response information included in the fourth message indicates a non-authenticated status.

20. The terminal of claim 18, wherein the program includes a third program for releasing the authentication of the multinet aggregation service, and the third program includes instructions
transmitting a multinet aggregation service deactivation request including a deactivation reason to the authentication server when receiving the multinet aggregation service setting release.

## Patentansprüche

1. Verfahren zum Betreiben eines Endgeräts (100) für einen Mehrfachnetz-Aggregationsdienst, umfassend:
Senden einer ersten Nachricht, die eine Aktivierung eines Mehrfachnetz-Aggregationsdienstes anfordert, an einen Authentisierungsserver (300);
Empfangen einer zweiten Nachricht, die eine Antwort auf die erste Nachricht ist, vom Authentisierungsserver (300); und
Zugreifen auf ein Gateway (200), das an einem Kontakt des Mehrfachnetzes positioniert ist, wenn die in der zweiten Nachricht enthaltenen Antwortinformationen eine Akzeptierung der Anforderung sind,
wobei, wenn die Antwortinformationen die Akzeptierung der Anforderung sind, die zweite Nachricht mindestens eine Adresse des Gateways (200) umfasst, und
wobei das Zugreifen auf das Gateway (200) basierend auf einer ersten Adresse auf das Gateway zugreift, die aus mindestens einer Adresse ausgewählt wird,
wobei bei Verwenden des Mehrfachnetz-Aggregationsdienstes das Endgerät (100) und das Gateway (200) Daten durch einen primären Teilfluss und einen sekundären Teilfluss senden und empfangen, die durch einen primären Pfad bzw. einen Teilpfad erzeugt werden;
wobei das Gateway (200) eine Netzwerkvorrichtung ist, die Teilflüsse aggregiert, die an einen Mehrfachpfad gesendet werden, oder einen Fluss, der an einen einzigen Pfad gesendet wird, in die Teilflüsse des Mehrfachpfads teilt und sendet.

2. Betriebsverfahren nach Anspruch 1, ferner umfassend:
periodisches Senden einer dritten Nachricht, die den Status des Mehrfachnetz-Aggregationsdienstes abfragt, in Abhängigkeit von der Statusabfragezeit an den Authentisierungsserver (300),
wobei, wenn die Antwortinformationen die Akzeptierung der Anforderung sind, die zweite Antwort ferner eine Statusabfragezeit umfasst.

3. Betriebsverfahren nach Anspruch 2, ferner umfassend:
Empfangen einer vierten Nachricht, die eine Antwort auf die dritte Nachricht ist, vom Authentisierungsserver (300) ;
Senden der dritten Nachricht zu einer nächsten Statusabfragezeit, wenn die in der vierten Nachricht enthaltenen Antwortinformationen einen authentisierten Status angeben; und Freigeben einer Einstellung des Mehrfachnetz-Aggregationsdienstes, der im Endgerät (100) eingestellt ist, wenn die in der vierten Nachricht enthaltenen Antwortinformationen einen nicht authentisierten Status angeben.

4. Betriebsverfahren nach Anspruch 3, ferner umfassend:
Senden der dritten Nachricht zur nächsten Statusabfragezeit, wenn die vierte Nachricht vom Authentisierungsserver (300) nicht empfangen wird.

5. Betriebsverfahren nach Anspruch 3, ferner umfassend:
Anzeigen von Benachrichtigungsinformationen, die in der vierten Nachricht enthalten sind, wenn die in der vierten Nachricht enthaltenen Antwortinformationen den nicht authentisierten Status angeben.

6. Betriebsverfahren nach Anspruch 1, ferner umfassend:
Anzeigen der Benachrichtigungsinformationen, die in der zweiten Nachricht enthalten sind,
wobei, wenn die Antwortinformationen nicht die Akzeptierung der Anforderung sind, die zweite Nachricht ferner Benachrichtigungsinformationen umfasst, welche die Antwortinformationen beschreiben.

7. Betriebsverfahren nach Anspruch 1, ferner umfassend:
Senden einer fünften Nachricht, die eine Deaktivierung des Mehrfachnetz-Aggregationsdienstes anfordert, an den Authentisierungsserver; und
Empfangen einer sechsten Nachricht, die eine Antwort auf die fünfte Nachricht ist, vom Authentisierungsserver.

8. Verfahren nach Anspruch 7, wobei die fünfte Nachricht einen Deaktivierungsgrund umfasst.

9. Betriebsverfahren nach Anspruch 1, ferner umfassend:
vor dem Senden der ersten Nachricht,
Senden einer siebten Nachricht, die eine Adresse des Authentisierungsservers (300) anfordert, an einen Domänennamenserver; und
Empfangen einer achten Nachricht, die eine Antwort auf die siebte Nachricht ist, vom Domänennamenserver,
wobei die achte Nachricht mindestens eine Adresse des Authentisierungsservers (300) umfasst.

10. Betriebsverfahren nach Anspruch 1, ferner umfassend:
erneutes Senden der ersten Nachricht an den Authentisierungsserver, wenn die Antwort auf die erste Nachricht vom Authentisierungsserver nicht empfangen wird,
wobei das erneute Senden der ersten Nachricht an den Authentisierungsserver (300) umfasst:
Bestimmen, ob eine zweite Adresse des Authentisierungsservers (300) vorhanden ist, wenn die erste Nachricht an eine erste Adresse des Authentisierungsservers gesendet und dann die Antwort nicht empfangen wird;
Senden der ersten Nachricht an die zweite Adresse, wenn die zweite Adresse des Authentisierungsservers (300) vorhanden ist; und
Senden der ersten Nachricht an die erste Adresse, wenn die zweite Adresse des Authentisierungsservers (300) nicht vorhanden ist.

11. Betriebsverfahren nach Anspruch 10, wobei das erneute Senden der ersten Nachricht an den Authentisierungsserver (300) ein Einstellen einer Referenzfrequenz für die Wiederholungssendung und erneutes Senden der ersten Nachricht innerhalb der Referenzfrequenz an die erste Adresse oder die zweite Adresse umfasst.

12. Verfahren zum Betreiben eines Authentifizierungsservers (300) für einen Mehrfachnetz-Aggregationsdienst eines Endgeräts (100), umfassend:
Empfangen einer ersten Nachricht, die eine Aktivierung des Mehrfachnetz-Aggregationsdienstes anfordert, vom Endgerät (100);
Erzeugen von Antwortinformationen an das Endgerät basierend auf der ersten Nachricht; und
Senden einer zweiten Nachricht, welche die Antwortinformationen umfasst, an das Endgerät (100),
wobei die Antwortinformationen ein authentisiertes Ergebnis umfassen, das angibt, ob das Endgerät (100) den Mehrfachnetz-Aggregationsdienst verwendet, wenn das Endgerät (100) ein Abonnent des Mehrfachnetz-Aggregationsdienstes ist, die Antwortinformationen das authentisierte Ergebnis, das angibt, dass das Endgerät den Mehrfachnetz-Aggregationsdienst verwendet, und mindestens eine Adresse eines Gateways (200) umfassen, und
wobei das Gateway (200) eine Netzwerkvorrichtung ist, die an einem Kontakt des Mehrfachnetzes positioniert ist und auf die zugegriffen wird, wenn das Endgerät (100) den Mehrfachnetz-Aggregationsdienst verwendet, wobei bei Verwenden des Mehrfachnetz-Aggregationsdienstes das Endgerät (100) und das Gateway (200) Daten durch einen primären Teilfluss und einen sekundären Teilfluss senden und empfangen, die durch einen primären Pfad bzw. einen Teilpfad erzeugt werden;
wobei das Gateway (200) eine Netzwerkvorrichtung ist, die Teilflüsse aggregiert, die an einen Mehrfachpfad gesendet werden, oder einen Fluss, der an einen einzigen Pfad gesendet wird, in Teilflüsse des Mehrfachpfads teilt und sendet.

13. Betriebsverfahren nach Anspruch 12, wobei das Erzeugen der Antwortinformationen das authentisierte Ergebnis basierend auf Abonnenteninformationen und einem Status des Endgeräts möglicher Dienstbereitstellung erzeugt.

14. Betriebsverfahren nach Anspruch 12, wobei, wenn das Endgerät der Abonnent des Mehrfachnetz-Aggregationsdienstes ist, die Antwortinformationen ferner eine Statusabfragezeit umfassen.

15. Betriebsverfahren nach Anspruch 14, ferner umfassend:
periodisches Empfangen einer dritten Nachricht, die einen Status des Mehrfachnetz-Aggregationsdienstes abfragt, in Abhängigkeit von der Statusabfragezeit vom Endgerät; und
Senden einer vierten Nachricht, die eine Antwort auf die dritte Nachricht ist, an das Endgerät,
wobei die vierte Nachricht ein authentisiertes Ergebnis umfasst, das angibt, ob das Endgerät den Mehrfachnetz-Aggregationsdienst verwendet.

16. Betriebsverfahren nach Anspruch 13, wobei, wenn das Endgerät (100) nicht der Abonnent des Mehrfachnetz-Aggregationsdienstes ist oder ein Dienstfehler auftritt, die Antwortinformationen ein authentisiertes Ergebnis, das angibt, dass das Endgerät den Mehrfachnetz-Aggregationsdienst nicht verwendet, und Benachrichtigungsinformationen umfassen, die das authentisierte Ergebnis beschreiben.

17. Betriebsverfahren nach Anspruch 12, ferner umfassend:
Empfangen einer fünften Nachricht, die eine Deaktivierung des Mehrfachnetz-Aggregationsdienstes anfordert, vom Endgerät; und
Senden einer sechsten Nachricht, die eine Antwort auf die fünfte Nachricht ist, an das Endgerät.

18. Endgerät zum Bereitstellen eines Mehrfachnetz-Aggregationsdienstes, umfassend:
mindestens ein Kommunikationsmodul;
mindestens eine Anzeige;
mindestens einen Speicher, der ein Programm speichert; und
mindestens einen Prozess, der mit dem Kommunikationsmodul, der Anzeige und dem Speicher zusammenarbeitet, um das Programm auszuführen,
wobei das Programm ein erstes Programm zum Authentisieren des Mehrfachnetz-Aggregationsdienstes umfasst, und
das erste Programm Anweisungen umfasst zum:
Senden einer ersten Nachricht, die ein Anfordern von Aktivierung des Mehrfachnetz-Aggregationsdienstes umfasst, an einen Authentisierungsserver, wenn eine Einstellung des Mehrfachnetz-Aggregationsdienstes empfangen wird,
Empfangen einer zweiten Nachricht, die eine Antwort auf die erste Nachricht ist, vom Authentisierungsserver, Zugreifen auf eine Adresse eines Gateways, die in der zweiten Nachricht enthalten ist, wenn Antwortinformationen, die in der zweiten Nachricht enthalten sind, akzeptiert werden, und
Anzeigen von Benachrichtigungsinformationen, die in der zweiten Nachricht enthalten sind, wenn die in der zweiten Nachricht enthaltenen Antwortinformationen nicht akzeptiert werden,
wobei das Gateway eine Netzwerkvorrichtung ist, die an einem Kontakt des Mehrfachnetzes positioniert ist und Verkehr im Mehrfachnetz-Aggregationsdienst weitergibt,
wobei bei Verwenden des Mehrfachnetz-Aggregationsdienstes das Endgerät (100) und das Gateway (200) Daten durch einen primären Teilfluss und einen sekundären Teilfluss senden und empfangen, die durch einen primären Pfad bzw. einen Teilpfad erzeugt werden;
wobei das Gateway (200) eine Netzwerkvorrichtung ist, die Teilflüsse aggregiert, die an einen Mehrfachpfad gesendet werden, oder einen Fluss, der an einen einzigen Pfad gesendet wird, in Teilflüsse des Mehrfachpfads teilt und sendet.

19. Endgerät nach Anspruch 18, wobei das Programm ein zweites Programm zum Konsultieren des Status des Mehrfachnetz-Aggregationsdienstes umfasst, und
das zweite Programm Anweisungen umfasst zum:
Senden einer dritten Nachricht, die den Status des Mehrfachnetz-Aggregationsdienstes abfragt, in Abhängigkeit von einer Statusabfragezeit an den Authentisierungsserver, wenn die Statusabfragezeit in der zweiten Nachricht enthalten ist,
Empfangen einer vierten Nachricht, die eine Antwort auf die dritte Nachricht ist, vom Authentisierungsserver,
Senden der dritten Nachricht zu einer nächsten Statusabfragezeit, wenn die in der vierten Nachricht enthaltenen Antwortinformationen einen authentisierten Status angeben, und
Freigeben einer Einstellung des Mehrfachnetz-Aggregationsdienstes, wenn die in der vierten Nachricht enthaltenen Antwortinformationen einen nicht authentisierten Status angeben.

20. Endgerät nach Anspruch 18, wobei das Programm ein drittes Programm zum Freigeben der Authentisierung des Mehrfachnetz-Aggregationsdienstes umfasst, und das dritte Programm Anweisungen umfasst zum:
Senden einer Anforderung zur Deaktivierung des Mehrfachnetz-Aggregationsdienstes, die einen Deaktivierungsgrund umfasst, an den Authentisierungsserver bei Empfang der Freigabe der Einstellung des Mehrfachnetz-Aggregationsdienstes.

## Revendications

1. Procédé de fonctionnement d'un terminal (100) pour un service d'agrégation multi-net, comprenant de :
transmettre un premier message demandant l'activation d'un service d'agrégation multi-net à un serveur d'authentification (300) ;
recevoir un deuxième message qui est une réponse au premier message à partir du serveur d'authentification (300) ; et
accéder à une passerelle (200) positionnée sur un point de contact du multi-net lorsque des informations de réponse incluses dans le deuxième message sont un consentement à la demande,
lorsque les informations de réponse sont le consentement à la demande, le deuxième message comporte au moins une adresse de la passerelle (200), et
dans lequel l'accès de la passerelle (200) donne accès à la passerelle (200) sur la base d'une première adresse choisie parmi au moins une adresse
dans lequel lors de l'utilisation d'un service d'agrégation multi-net, le terminal (100) et la passerelle (200) transmettent et reçoivent des données à travers un sous-flux primaire et un sous-flux secondaire générés à travers un trajet primaire et un sous-trajet, respectivement ;
dans lequel la passerelle (200) est un appareil de réseau qui agrège des sous-flux transmis à des trajets multiples ou qui fractionne et qui transmet un flux transmis à un trajet unique dans les sous-flux des trajets multiples.

2. Procédé de fonctionnement selon la revendication 1, comprenant en outre de
transmettre périodiquement un troisième message demandant le statut de service d'agrégation multi-net au serveur d'authentification (300) en fonction du moment de la demande de statut,
dans lequel lorsque les informations de réponse sont le consentement à la demande, le deuxième message comporte en outre un moment de demande de statut.

3. Procédé de fonctionnement selon la revendication 2, comprenant en outre de :
recevoir un quatrième message qui est une réponse au troisième message à partir du serveur d'authentification (300) ;
transmettre le troisième message au moment de la demande de statut suivant lorsque des informations de réponse incluses dans le quatrième message indiquent un statut authentifié ; et libérer un réglage du service d'agrégation multi-net réglé dans le terminal (100) lorsque les informations de réponse incluses dans le quatrième message indiquent un statut non authentifié.

4. Procédé de fonctionnement selon la revendication 3, comprenant en outre de
transmettre le troisième message au moment de la demande de statut suivant lorsque le quatrième message n'est pas reçu à partir du serveur d'authentification (300) .

5. Procédé de fonctionnement selon la revendication 3, comprenant en outre de
afficher des informations de notification incluses dans le quatrième message lorsque des informations de réponse incluses dans le quatrième message indiquent le statut non authentifié.

6. Procédé de fonctionnement selon la revendication 1, comprenant en outre de
afficher les informations de notification incluses dans le deuxième message,
dans lequel lorsque les informations de réponse ne sont pas le consentement à la demande, le deuxième message comporte en outre des informations de notification décrivant les informations de réponse.

7. Procédé de fonctionnement selon la revendication 1, comprenant en outre de :
transmettre un cinquième message demandant la désactivation du service d'agrégation multi-net à un serveur d'authentification ; et
recevoir un sixième message qui est une réponse au cinquième message à partir du serveur d'authentification.

8. Procédé de fonctionnement selon la revendication 7, dans lequel le cinquième message comporte une raison de désactivation.

9. Procédé de fonctionnement selon la revendication 1, comprenant en outre de :
avant la transmission du premier message,
transmettre un septième message demandant une adresse du serveur d'authentification (300) à un serveur de nom de domaine ; et
recevoir un huitième message qui est une réponse au septième message à partir du serveur de noms de domaine,
dans lequel le huitième message comporte au moins une adresse du serveur d'authentification (300).

10. Procédé de fonctionnement selon la revendication 1, comprenant en outre de :
retransmettre le premier message au serveur d'authentification lorsque la réponse au premier message n'est pas reçue à partir du serveur d'authentification,
dans lequel la retransmission du premier message au serveur d'authentification (300) comporte de :
déterminer si une deuxième adresse du serveur d'authentification (300) est présente, lorsque le premier message est transmis à une première adresse du serveur d'authentification et lorsque la réponse n'est pas reçue ;
transmettre le premier message à la deuxième adresse lorsque la deuxième adresse du serveur d'authentification (300) est présente ; et
transmettre le premier message à la première adresse lorsque la deuxième adresse du serveur d'authentification n'est pas présente.

11. Procédé de fonctionnement selon la revendication 10, dans lequel la retransmission du premier message au serveur d'authentification (300) comporte le réglage d'une fréquence de référence pour la retransmission, et la retransmission du premier message à la première adresse ou à la deuxième adresse dans la fréquence de référence.

12. Procédé de fonctionnement d'un serveur d'authentification (300) pour un service d'agrégation multi-net d'un terminal (100), comprenant de :
recevoir un premier message demandant l'activation du service d'agrégation multi-net du terminal (100) ;
générer des informations de réponse au terminal sur la base du premier message ; et
transmettre un deuxième message comportant les informations de réponse au terminal (100),
dans lequel les informations de réponse comportent un résultat authentifié indiquant si le terminal (100) utilise le service d'agrégation multi-net lorsque le terminal (100) est un abonné au service d'agrégation multi-net, les informations de réponse comportent le résultat authentifié indiquant que le terminal utilise le service d'agrégation multi-net et au moins une adresse d'une passerelle (200), et
la passerelle (200) est un appareil de réseau qui est positionné sur un point de contact du multi-net et accessible lorsque le terminal (100) utilise le service d'agrégation multi-net dans lequel lors de l'utilisation du service d'agrégation multi-net, le terminal (100) et la passerelle (200) transmettent et reçoivent des données à travers un sous-flux primaire et un sous-flux secondaire générés à travers un trajet primaire et un sous-trajet, respectivement ;
dans lequel la passerelle (200) est un appareil de réseau qui agrège des sous-flux transmis à des trajets multiples ou qui fractionne et qui transmet un flux transmis à un trajet unique dans les sous-flux des trajets multiples.

13. Procédé de fonctionnement selon la revendication 12, dans lequel la génération des informations de réponse génère le résultat authentifié sur la base d'informations d'abonné et d'un service fournissant un statut possible du terminal.

14. Procédé de fonctionnement selon la revendication 12, dans lequel
lorsque le terminal est l'abonné au service d'agrégation multi-net, les informations de réponse comportent en outre un moment de demande de statut.

15. Procédé de fonctionnement selon la revendication 14, comprenant en outre de :
recevoir périodiquement un troisième message demandant un statut de service d'agrégation multi-net du terminal en fonction du moment de la demande de statut ; et
transmettre un quatrième message qui est une réponse au troisième message au terminal,
dans lequel le quatrième message comporte un résultat authentifié indiquant si le terminal utilise le service d'agrégation multi-net.

16. Procédé de fonctionnement selon la revendication 13, dans lequel
lorsque le terminal (100) n'est pas l'abonné au service d'agrégation multi-net ou qu'une erreur de service se produit, les informations de réponse comportent un résultat authentifié indiquant que le terminal n'utilise pas le service d'agrégation multi-net et des informations de notification décrivant le résultat authentifié.

17. Procédé de fonctionnement selon la revendication 12, comprenant en outre de :
recevoir un cinquième message demandant la désactivation du service d'agrégation multi-net du terminal ; et
transmettre un sixième message qui est une réponse au cinquième message au terminal.

18. Terminal pour fournir un service d'agrégation multi-net, comprenant :
au moins un module de communication ;
au moins un dispositif d'affichage ;
au moins une mémoire stockant un programme ; et
au moins un processeur interfonctionnant avec le module de communication, le dispositif d'affichage, et la mémoire pour exécuter le programme,
dans lequel le programme comporte un premier programme pour authentifier le service d'agrégation multi-net, et
le premier programme comporte des instructions
transmettant un premier message comportant la demande d'activation du service d'agrégation multi-net à un serveur d'authentification lorsqu'un réglage du service d'agrégation multi-net est reçu,
recevant un deuxième message qui est une réponse au premier message à partir du serveur d'authentification, accédant à une adresse d'une passerelle incluse dans le deuxième message lorsque des informations de réponse incluses dans le deuxième message sont acceptées, et
affichant des informations de notification incluses dans le deuxième message lorsque les informations de réponse incluses dans le deuxième message ne sont pas acceptées,
dans lequel la passerelle est un appareil de réseau qui est positionné sur un point de contact du multi-net et qui relaye un trafic du service d'agrégation multi-net
dans lequel lors de l'utilisation du service d'agrégation multi-net, le terminal (100) et la passerelle (200) transmettent et reçoivent des données à travers un sous-flux primaire et un sous-flux secondaire générés à travers un trajet primaire et un sous-trajet, respectivement ;
dans lequel la passerelle (200) est un appareil de réseau qui agrège des sous-flux transmis à des trajets multiples ou qui fractionne et qui transmet un flux transmis à un trajet unique dans les sous-flux des trajets multiples.

19. Procédé selon la revendication 18, dans lequel le programme comporte un deuxième programme pour demander le statut de service d'agrégation multi-net, et
le deuxième programme comporte des instructions
transmettant un troisième message demandant le statut de service d'agrégation multi-net au serveur d'authentification en fonction d'un moment de demande de statut lorsque le moment de la demande de statut est inclus dans le deuxième message,
recevant un quatrième message qui est une réponse au troisième message à partir du serveur d'authentification,
transmettant le troisième message au moment de la demande de statut suivant lorsque des informations de réponse incluses dans le quatrième message indiquent un statut authentifié, et
libérant un réglage du service d'agrégation multi-net lorsque les informations de réponse incluses dans le quatrième message indiquent un statut non authentifié.

20. Terminal selon la revendication 18, dans lequel le programme comporte un troisième programme pour libérer l'authentification du service d'agrégation multi-net, et le troisième programme comporte des instructions
transmettant une demande de désactivation de service d'agrégation multi-net comportant une raison de désactivation au serveur d'authentification lors de la réception de la libération du réglage de service d'agrégation multi-net.
